# EUROPÄISCHE PATENTANMELDUNG

(11) **EP 1 959 189 A1**
(43) Veröffentlichungstag der Anmeldung: **20.08.2008**
(21) Anmeldenummer: 08000048.2
(22) Anmeldetag: 03.01.2008
(51) Int. Cl.: F21V 14/00, F21V 14/08

(54) **Scheinwerferanordnung, Verfahren zum Betreiben einer Scheinwerferanordnung und Kraftfahrzeug**

(30) Priorität: 15.02.2007 DE 102007007466
(71) Anmelder: GM Global Technology Operations, Inc., Detroit, MI 48265-300 (US)
(72) Erfinder: Rampf, Klaus-Dieter, 72070 Tübingen (DE)
(74) Vertreter: Strauss, Peter

(57) **Zusammenfassung**

Die Erfindung betrifft ein Scheinwerferanordnung, mit einem Kraftfahrzeug-Scheinwerfer (5), der in zumindest zwei Betriebsmodi betreibbar ist, sowie des Weiteren mit einer Ansteuervorrichtung (6) für den Kraftfahrzeug-Scheinwerfer, welsche dazu ausgelegt, den Scheinwerfer (5) derart zu betreiben, dass der Scheinwerfer (5) in dem ersten Betriebmodus von einer Lichtquelle (15) erzeugtes Licht lediglich über einen ersten Abschnitt (25) einer Lichtscheibe (10) abstrahlt und in dem zweiten Betriebmodus von der Lichtquelle (15) erzeugtes Licht über einen zweiten, vom ersten Abschnitt (25) verschiedenen Abschnitt (24) der Lichtscheibe (10) abstrahlt. Ferner betrifft die Erfindung ein Verfahren zum Betreiben eines Kraftfahrzeug-Scheinwerfers sowie ein Kraftfahrzeug.

## Beschreibung

Die Erfindung betrifft eine Scheinwerferanordnung, ein Verfahren zum Betreiben einer Scheinwerferanordnung sowie ein Kraftfahrzeug.

Es ist allgemein bekannt, dass ein Fahrzeugnutzer unterschiedliche Systeme seines Kraftfahrzeuges an eine von ihm gewünschte Betriebsart anpassen kann. So ist es bei modernen Kraftfahrzeugen z. B. möglich, zwischen einem Komfortmodus und einem Sportmodus auszuwählen. Der jeweils ausgewählte Modus beeinflusst unter anderem die Einstellungen des Fahrwerks, die Steifigkeit der Lenkung oder die Gasannahme. So wird bei einem ausgewählten Sportmodus das Fahrwerk straffer, die Lenkung direkter und/oder die Gasannahme spontaner. Dieser Möglichkeit der Einflussnahme durch den Fahrzeugnutzer liegt der Wunsch zugrunde, zwei Kraftfahrzeuge mit unterschiedlichen Funktionen in einem zu besitzen.

Über diese Anpassung der technischen Kraftfahrzeugseigenschaften hinaus möchte der Fahrzeugnutzer z. B. eine sportliche Fahrweise zusätzlich auch durch das optische Erscheinungsbild des Kraftfahrzeuges verdeutlichen. Eine flexible Anpassung des Äußeren in ein dezent-seriöses oder in ein sportliches Erscheinungsbild des Kraftfahrzeuges ist insbesondere durch die Anpassung der Kraftfahrzeug-Scheinwerfer möglich, da diese wesentlich den Charakter des Kraftfahrzeuges mit prägen. Eine Beeinträchtigung anderer Verkehrsteilnehmer oder gar eine Gefährdung der Verkehrssicherheit darf dabei indes nicht auftreten.

Vor diesem Hintergrund liegt der vorliegenden Erfindung die Aufgabe zugrunde, eine flexiblere Gestaltung der Kraftfahrzeug-Scheinwerfer zu schaffen.

Diese Aufgabe wird erfindungsgemäß durch eine Scheinwerferanordnung mit den Merkmalen des Patentanspruches 1 und/oder durch ein Verfahren mit den Merkmalen des Patentanspruchs 23 und/oder durch ein Kraftfahrzeug mit den Merkmalen des Patentanspruches 29 gelöst.

Demgemäß ist eine Scheinwerferanordnung mit einem steuerbaren Kraftfahrzeug-Scheinwerfer vorgesehen, wobei der Scheinwerfer ein Scheinwerfergehäuse aufweist und in dem Scheinwerfergehäuse eine zumindest teiltransparente Lichtscheibe und innerhalb zumindest eine Lichtquelle angeordnet ist. Ferner ist mit dem Kraftfahrzeug-Scheinwerfer eine Ansteuereinrichtung verbunden, welche dazu ausgelegt ist, den Kraftfahrzeug-Scheinwerfer in zumindest zwei Betriebsmodi zu betreiben. In einem ersten Betriebsmodus wird von der Lichtquelle erzeugtes Licht lediglich über einen ersten Abschnitt der Lichtscheibe abgestrahlt und in einem zweiten Betriebsmodus wird von der Lichtquelle erzeugtes Licht über einen zweiten, vom ersten Abschnitt zumindest teilweise verschiedenen Abschnitt der Lichtscheibe abgestrahlt.

Des Weiteren ist ein Verfahren zum Betreiben eines Scheinwerfers vorgesehen, wobei der Scheinwerfer zumindest eine Lichtquelle und eine zumindest teiltransparente Lichtscheibe aufweist. Der Scheinwerfer ist durch das erfindungsgemäße Verfahren in zumindest zwei Betriebsmodi betreibbar. In einem ersten Betriebsmodus wird von der Lichtquelle erzeugtes Licht über einen ersten Abschnitt der Lichtscheibe abgestrahlt und in einem zweiten Betriebsmodus wird von der Lichtquelle erzeugtes Licht über einen zweiten, vom ersten Abschnitt zumindest teilweise verschiedenen Abschnitt der zumindest teiltransparenten Lichtscheibe abgestrahlt.

Ferner ist ein erfindungsgemäßes Kraftfahrzeug vorgesehen, welches die erfindungsgemäße Scheinwerferanordnung enthält.

Der Erfindung liegt die Idee zugrunde, dem Wunsch eines Fahrzeugnutzers nachzukommen, das Erscheinungsbild seines Kraftfahrzeuges nachträglich noch abändern zu können. Insbesondere erhält der Fahrzeugnutzer durch eine Anpassung des Erscheinungsbildes der Kraftfahrzeug-Scheinwerfer die Möglichkeit, hinsichtlich des Äußeren mehrere Kraftfahrzeuge in einem einzigen Kraftfahrzeug zu vereinen. Da die Kraftfahrzeug-Scheinwerfer einen wesentlichen Einfluss auf das Erscheinungsbild des Kraftfahrzeugs ausüben, kann allein durch die Änderung des Erscheinungsbildes der Scheinwerfer das gesamte Äußere des Kraftfahrzeugs signifikant verändert werden.

Zudem genügen die einstellbaren Betriebsmodi der Scheinwerfer designerischen Aspekten. Durch eine solche Scheinwerferanordnung ist es dem Fahrzeugnutzer möglich, quasi auf Knopfdruck nicht nur die charakteristischen Eigenschaften, z. B. des Fahrwerks oder der Lenkung, zu beeinflussen, sondern darüber hinaus auch das Erscheinungsbild seines Kraftfahrzeuges. Dabei wird die Funktion des jeweiligen Kraftfahrzeug-Scheinwerfers nicht oder zumindest nur unwesentlich beeinflusst, was aufgrund der Verkehrssicherheit auch geboten ist.

In den Unteransprüchen finden sich vorteilhafte Ausgestaltungen, Weiterbildungen und Verbesserungen der Erfindung.

Bevorzugt ist der erste Abschnitt vollständig verschieden zum zweiten Abschnitt. Somit wird Licht im ersten Betriebsmodus von einem vollständig verschiedenen Abschnitten der zumindest teiltransparenten Lichtscheibe abgestrahlt als im zweiten Betriebsmodus. Dies gewährleistet eine deutliche Unterscheidung der Betriebsmodi.

Ferner weist der Kraftfahrzeug-Scheinwerfer im ersten Betriebsmodus die gleiche Funktion auf wie im zweiten Betriebsmodus. Durch dieses Merkmal wird gewährleistet, dass der jeweilige Scheinwerfer unabhängig vom Betriebsmodus die jeweils zugeordnete Funktion beibehält. Somit werden weder der Fahrzeugnutzer noch andere Verkehrsteilnehmer durch eine irritierende Lichtabstrahlung des jeweiligen Kraftfahrzeug-Scheinwerfers beeinträchtigt.

Des Weiteren bevorzugt weist der Kraftfahrzeug-Scheinwerfer bei der gleichen Funktion eine in etwa gleiche Leuchtrichtung, Leuchtintensität und/oder Ausleuchtbeziehungsweise Signalwirkung auf. So besteht an ein Fernlicht zum Beispiel die Anforderung den Bereich vor dem Kraftfahrzeug intensiv auszuleuchten. Dieses intensive Ausleuchten muss in jedem der Betriebsmodi möglich sind. Auch darf zum Beispiel die Signalwirkung eines Blinkers und/oder eins Bremslichtes nicht beeinträchtigt werden. Diese Kraftfahrzeug-Scheinwerfer müssen immer noch als solche von anderen Verkehrsteilnehmern erkennbar sein. Abweichungen der unterschiedlichen Betriebsmodi bezüglich Leuchtintensität, Leuchtrichtung und/oder Ausleucht- und/oder Signalwirkung sind dahingehend in einem gewissen vorgeschriebenen Rahmen zulässig. Dadurch wird insbesondere gewährleistet, dass keine Beeinträchtigung des Verkehrsgeschehens auftritt.

In einer besonders einfach und kostengünstig zu implementierenden Weiterbildung weist der Kraftfahrzeug-Scheinwerfer zwei Lichtquellen auf, wobei eine erste Lichtquelle dem ersten Betriebsmodus und eine zweite Lichtquelle dem zweiten Betriebsmodus zugeordnet ist. Eine Änderung des äußeren Erscheinungsbildes des Scheinwerfers und somit auch des Kraftfahrzeuges, ist dadurch zu erreichen, dass im ersten Betriebsmodus die erste Lichtquelle und im zweiten Betriebsmodus die zweite Lichtquelle von einer Energiequelle mit elektrischer Energie versorgt wird. Enthalten die erste und die zweite Lichtquelle jeweils eine Vielzahl von Leuchtmitteln, so kann bereits durch das Bereitstellen zweier Lichtquellen ein differenziertes Äußeres des Kraftfahrzeug-Scheinwerfers und somit des Kraftfahrzeuges erreicht werden. Dies ist allein durch eine geschickte Anordnung der Leuchtmittel der jeweiligen Lichtquelle in dem Kraftfahrzeug-Scheinwerfer möglich.

Bevorzugt weist der Kraftfahrzeug-Scheinwerfer darüber hinaus zumindest zwei voneinander getrennte Kammern auf, wobei die erste Lichtquelle in der ersten und die zweite Lichtquelle in der zweiten Kammer angeordnet ist. Eine Wand der jeweiligen Kammer ist jeweils als ein Abschnitt der zumindest teiltransparenten Lichtscheibe ausgebildet. Dadurch ist es möglich, dass nur der jeweiligen Kammer zugeordnete Abschnitt der zumindest teiltransparenten Lichtscheibe Licht abstrahlt, abhängig davon, ob die Lichtquelle der ersten Kammer oder die Lichtquelle der zweiten Kammer mit elektrischer Energie versorgt wird. Eine Anpassung des Designs abhängig von dem jeweiligen Betriebsmodus ist über die Abmaße der Kammer und der zumindest teiltransparenten Lichtscheibe sowie der Anzahl der Leuchtmittel einfach möglich.

In einer alternativen, ebenfalls bevorzugten Ausgestaltung, ist es möglich, sämtliche Lichtquellen gleichzeitig mit elektrischer Energie zu versorgen und dennoch ein differenziertes Äußeres des Kraftfahrzeug-Scheinwerfers zu erreichen. Dies ist unter Zuhilfenahme einer lichtundurchlässigen Abdeckblende möglich, mit der definierte Bereiche der zumindest teiltransparenten Lichtscheibe abgedeckt werden. Durch dieses Abdecken wird lediglich von den nicht abgedeckten Abschnitten der zumindest teiltransparenten Lichtscheibe Licht abgestrahlt. Um dieses Abdecken zu realisieren, ist eine Umschalteinrichtung vorgesehen, welche die Abdeckblende in unterschiedliche Positionen der Lichtscheibe bewegt. Dabei kann z. B. eine erste Position einem ersten Betriebsmodus und eine zweite Position einem zweiten Betriebsmodus zugeordnet sein. Abhängig von den eingestellten Betriebsmodi strahlt somit nur der nicht-abgedeckte Abschnitt der zumindest teiltransparenten Lichtscheibe von der Lichtquelle emittiertes Licht ab. Bei einem solchen System ist es möglich, lediglich eine Lichtquelle zu verwenden und dennoch das Erscheinungsbild des Kraftfahrzeug-Scheinwerfers und somit des Kraftfahrzeuges an sich zu verändern. Ferner sind eine Vielzahl von Gestaltungsmöglichkeiten der Abdeckblende denkbar. Durch Ausnehmungen und Durchbrüche, die in quasi beliebigen Ausprägungen realisiert werden können, ist es einfach und kostgünstig möglich, das Design des Kraftfahrzeug-Scheinwerfers anzupassen. Darüber hinaus wäre es auch denkbar, dass die Abdeckblende nachträglich ausgetauscht und somit das Design des Kraftfahrzeug-Scheinwerfers an neue Bedürfnisse des Fahrzeugnutzers angepasst wird.

Ferner bevorzugt weist der Kraftfahrzeug-Scheinwerfer eine weitere Lichtscheibe auf, deren Transparenz elektrisch veränderbar ausgebildet ist. Eine solche Lichtscheibe mit veränderbarer Transparenz erlaubt es, den emittierten Lichtanteil des Kraftfahrzeug-Scheinwerfers einfach einzustellen. Eine solche Lichtscheibe lässt sich problemlos in einen Kraftfahrzeug-Scheinwerfer integrieren. Zudem können auch ältere Kraftfahrzeuge nachträglich mit einer solchen Lichtscheibe ausgerüstet werden.

Des Weiteren bevorzugt weist die weitere Lichtscheibe Flüssigkristalle auf, deren Transparenz sich abhängig von einer angelegten Spannung ändert. Vorteilhaft an solchen Flüssigkristallen ist anzusehen, dass durch diese die Transparenz einer Scheibe signifikant geändert werden kann und der Stromverbrauch dieser Kristalle dennoch ausgesprochen gering ist. Zudem kann die Transparenz der Scheibe, die solche Flüssigkristalle aufweist, mit sehr kurzen Reaktionszeiten im Millisekundenbereich geändert werden.

Ferner bevorzugt weist die weitere Lichtscheibe zumindest ein erstes und ein zweites Scheibensegment auf, wobei die Transparenz beider Scheibensegmente unabhängig voneinander elektrisch veränderbar sind. Zudem bevorzugt wird im ersten Betriebsmodus die Transparenz des ersten Scheibensegmentes und im zweiten Betriebsmodus die Transparenz des zweiten Scheibensegmentes verändert. Durch die Verwendung verschiedener Scheibensegmente, wobei jedes der Scheibensegmente einem Betriebsmodus zugeordnet ist, kann das optische Erscheinungsbild des Scheinwerfers sehr einfach verändert werden. Zudem kann diese weitere Lichtscheibe in eine Vielzahl von unterschiedlichen Scheibensegmenten unterteilt sein, wobei eine gewisse Anzahl an Scheibensegmenten einem ersten und davon verschiedene Scheibensegmente einem zweiten Betriebsmodus zugeordnet sind. Auch ist es möglich, dass der erste und/oder der zweite Betriebsmodus Scheibensegmente nutzt, die dem jeweils anderen Betriebsmodus zugeordnet sind. Dies lässt sich auf eine quasi beliebige Anzahl von Betriebsmodi anwenden mit einem jeweils angepassten Äußeren des Kraftfahrzeug-Scheinwerfers.

Ferner bevorzugt ist die weitere Lichtscheibe mit der Ansteuereinrichtung verbunden, welche die Betriebsmodi steuert. In einer solchen Ansteuereinrichtung kann z. B. vorteilhafterweise hinterlegt sein, welche Scheibensegmente welchem Betriebsmodus zugeordnet sind. Soll das Erscheinungsbild des Kraftfahrzeug-Scheinwerfers nachträglich geändert werden, so ist es möglich, die Ansteuereinrichtung entsprechend umzuprogrammieren, so dass sich die Transparenz anderer Scheibensegmente ändert. Eine nachträgliche Anpassung des Äußeren des Kraftfahrzeug-Scheinwerfers abhängig von dem Betriebsmodus ist somit einfach möglich.

Ferner bevorzugt wird die weitere Lichtscheibe parallel zu der zumindest teiltransparenten Lichtscheibe angeordnet. Dadurch lässt sich eine solche transparenzveränderbare Lichtscheibe auch nachträglich in einen Kraftfahrzeug-Scheinwerfer einbauen. Eine Nachrüstung älterer Kraftfahrzeuge ist somit möglich.

Ferner bevorzugt wird die weitere Lichtscheibe anstelle der zumindest teiltransparenten Lichtscheibe in den Kraftfahrzeug-Scheinwerfer eingebaut. Diese Einbauvariante kann insbesondere vorteilhaft bei der Integration einer solchen Lichtscheibe in ein Kraftfahrzeug-Scheinwerfer eines Neuwagens genutzt werden. Der Montageaufwand einer zusätzlichen Scheibe entfällt somit.

Ferner ist gemäß einem bevorzugten Ausführungsbeispiel eine mit der Ansteuereinrichtung verbundene Auswahleinrichtung zur Festlegung des jeweiligen Betriebsmodus vorgesehen. Diese Auswahleinrichtung kann z. B. als ein manueller Umschalter ausgeführt und in der Fahrgastzelle angeordnet sein. Dadurch ist es für den Fahrzeugnutzer möglich, dass äußere Erscheinungsbild des Kraftfahrzeug-Scheinwerfers nach Belieben zu wählen. Ferner kann, die Auswahleinrichtung derart in das Kraftfahrzeug integriert werden, dass abhängig von Fahrparametern zwischen dem ersten und dem zweiten Betriebsmodus umgeschaltet wird. Einer dieser Parameter kann z. B. die Fahrzeuggeschwindigkeit sein.

Bevorzugt wird des Weiteren eine mit der Ansteuereinrichtung verbundenen Anzeigeeinrichtung bereitgestellt, wobei die Anzeigeeinrichtung den eingestellten Betriebsmodus anzeigt. Diese Anzeigeeinrichtung kann die Anzeige sowohl analog, digital, durch beleuchtete Piktogramme oder dergleichen realisieren. Bevorzugt ist die Anzeigeeinrichtung in der Fahrgastzelle angeordnet. Durch diese Einrichtung kann sich der Fahrzeugnutzer jederzeit darüber informieren, welcher Betriebsmodus eingestellt ist. Zweckmäßigerweise werden die beleuchteten Piktogramme unmittelbar an der Auswahleinrichtung angeordnet. Dadurch ist eine einfache Zuordnung der Anzeige auf die Funktion des unterschiedlichen Lichtabstrahlens des Kraftfahrzeug-Scheinwerfers möglich.

Des Weiteren bevorzugt wird nicht nur das optische Erscheinungsbild eines Frontscheinwerfers geändert, sondern ebenfalls das Erscheinungsbild anderer Kraftfahrzeug-Scheinwerfer, wie z. B. der Rückleuchten. Auch das optische Erscheinungsbild von Bremslichtern oder Blinkern kann bevorzugt verändert werden. Werden verschiedene Kraftfahrzeug-Scheinwerfer zum gleichen Zeitpunkt abhängig von dem Betriebsmodus hinsichtlich ihrer optischen Eigenschaften angepasst, ist es möglich, eine Art designerisches Thema zu kreieren, welches dem Kraftfahrzeug ein ganzheitliches angenehmes Äußeres verleiht.

Bevorzugt sind die den Lichtquellen zugeordneten Leuchtmittel als Glühlampen, Leuchtdioden, Halogenlampen, Gasentladungslampen oder dergleichen ausgeführt. Scheinwerferabhängig ist es vorteilhaft, wenn unterschiedliche Leuchtmittel verwendet werden. Dadurch ist vorteilhafterweise auch eine Energieeinsparung möglich.

Bevorzugt ist zusätzlich ein Verfahren zum Betreiben eines Scheinwerfers, insbesondere eines Scheinwerfers für ein Kraftfahrzeug, vorgesehen. Der zu betreibende Scheinwerfer weist dabei zumindest eine Lichtquelle mit zumindest einem Leuchtmittel auf. Ferner beinhaltet der Scheinwerfer eine zumindest teiltransparente Lichtscheibe. Der Scheinwerfer wird durch das Verfahren in der Art betrieben, dass in einem ersten Betriebsmodus von der Lichtquelle erzeugtes Licht über einen ersten Abschnitt der zumindest teiltransparenten Lichtscheibe und in einem zweiten Betriebsmodus von der Lichtquelle erzeugtes Licht über einen zweiten Abschnitt der zumindest teiltransparenten Lichtscheibe abgestrahlt wird. Erst durch dieses Verfahren wird der Betrieb eines Scheinwerfers in unterschiedlichen Betriebsmodi ermöglicht.

In einer ersten Verfahrensvariante zum Betreiben eines Kraftfahrzeug-Scheinwerfers, wird bevorzugt im ersten Betriebsmodus eine erste Lichtquelle und im zweiten Betriebsmodus eine zweite Lichtquelle aktiviert.

In einer zweiten Verfahrensvariante zum Betreiben eines Kraftfahrzeug-Scheinwerfers wird im ersten Betriebsmodus ein erster Abschnitt und im zweiten Betriebsmodus ein zweiter Abschnitt der zumindest teiltransparenten Lichtscheibe abgedeckt.

Bevorzugt wird in beiden Verfahrensvarianten über eine Auswahleinrichtung festgelegt, ob der erste oder der zweite Betriebsmodus vorliegt.

Des Weiteren werden bevorzugt durch das erfindungsgemäße Verfahren abhängig vom festgelegten Betriebsmodus charakteristische Eigenschaften weiterer im Kraftfahrzeug enthaltener Systeme, insbesondere eines Fahrwerk und/oder Lenkungssystem und/oder einer Instrumentenbeleuchtung verändert. Dadurch ändert sich ganzheitlich nicht nur das Äußere des Kraftfahrzeuges, sondern ferner auch dessen Fahreigenschaften. Durch die Änderung sowohl der Fahreigenschaften als auch des Erscheinungsbildes, wird sowohl dem Fahrzeugnutzer als auch den anderen Verkehrsteilnehmern abhängig vom Betriebsmodus der Eindruck vermittelt, dass ein sportliches oder ein dezent-seriöses Fahrzeug vorliegt.

Bevorzugt ausgeführt wird des Weiteren ein Kraftfahrzeug, welches eine in mehreren Betriebsmodi betreibbare Scheinwerferanordnung aufweist. Dabei ist der zumindest eine Kraftfahrzeug-Scheinwerfer in die Karosserie des Kraftfahrzeuges integriert. Die Ansteuereinrichtung und die Energiequelle können an quasi beliebiger Stelle innerhalb der Karosserie, wie z. B. dem Motorraum oder dem Kofferraum, angeordnet sein. Ferner wird zweckmäßigerweise an für die Fahrzeugnutzer gut erreichbarer bzw. einsehbarer Stelle in der Fahrgastzelle, die Auswahleinrichtung bzw. die Anzeigeeinrichtung angeordnet.

Die Erfindung wird im Folgenden anhand von Ausführungsbeispielen unter Bezugnahme auf die beiliegenden Figuren der Zeichnung näher erläutert. Davon zeigt:
- Fig. 1: ein Flussdiagramm, in dem die wesentlichen Stellbefehle, Entscheidungen und Betriebsmodi dargestellt sind;
- Fig. 2a: einen stilisierten Kraftfahrzeug-Scheinwerfer im ersten Betriebsmodus;
- Fig. 2b: ein stilisierten Kraftfahrzeug-Scheinwerfer im zweiten Betriebsmodus;
- Fig. 3: ein Blockschaltbild der erfindungsgemäßen Scheinwerferanordnung gemäß einem bevorzugten Ausführungsbeispiel;
- Fig. 4: einen Kraftfahrzeug-Scheinwerfer in einem ersten bevorzugten Ausführungsbeispiel;
- Fig. 5: einen Kraftfahrzeug-Scheinwerfer in einem zweiten bevorzugten Ausführungsbeispiel;
- Fig.6a, 6b: einen Kraftfahrzeug-Scheinwerfer in einem dritten bevorzugten Ausführungsbeispiel;
- Fig. 7: ein Kraftfahrzeug, welches die erfindungsgemäße Scheinwerferanordnung gemäß dem bevorzugten Ausführungsbeispiel aus Fig. 3 enthält.

In den Figuren der Zeichnungen bezeichnen die selben Bezugszeichen gleiche oder funktionsgleiche Komponenten, soweit nichts Gegenteiliges angegeben ist.

Beispielhaft wird das Funktionsprinzip nachfolgend anhand zweier Betriebsmodi erläutert, wobei es offensichtlich ist, dass auch mehr als zwei Betriebsmodi möglich sind. Darüber hinaus ist es offensichtlich, dass der im Weiteren verwendete Begriff des Kraftfahrzeug-Scheinwerfers sämtliche Scheinwerfer umfasst, die ein Kraftfahrzeug aufweist. So umfasst der Begriff des Kraftfahrzeug-Scheinwerfers nicht nur Frontscheinwerfer, sondern ebenfalls Rückleuchten, Blinker oder Bremslichter sowie sämtliche andere an einem Kraftfahrzeug angebrachten Scheinwerfer.

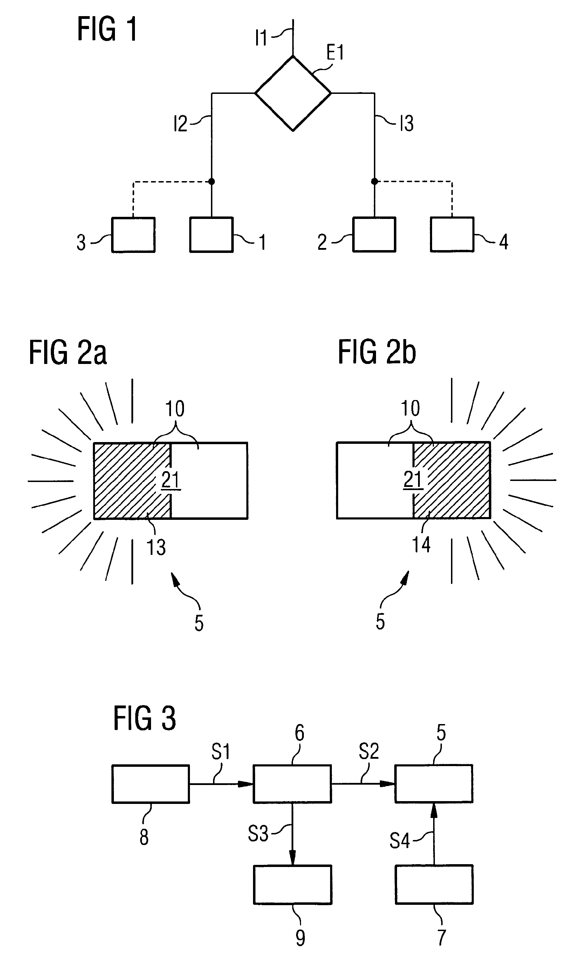

In Fig. 1 sind die wesentlichen Entscheidungen, Stellbefehle sowie Betriebsmodi dargestellt. Anfangs liegt ein Stellbefehl I1 vor, der eine Information darüber beinhaltet, welcher Betriebsmodus vorliegen soll. Dieser Stellbefehl I1 wird durch eine Entscheidungslogik E1 interpretiert. Anschließend wird ein Stellbefehl I2 oder I3 und weitergegeben, der Informationen darüber beinhaltet, ob insbesondere der Kraftfahrzeug-Scheinwerfer in einen ersten oder zweiten Betriebsmodus übergehen soll. Erhält der Kraftfahrzeug-Scheinwerfer eine Stellbefehl I2, so wird Licht von dem Kraftfahrzeugscheinwerfer in einer ersten Variante abgestrahlt. Darüber hinaus können beim Vorliegen des ersten Betriebsmodus nicht nur die Lichtabstrahlcharakteristik eines Kraftfahrzeug-Scheinwerfers geändert, sondern ebenfalls weitere Systeme des Kraftfahrzeuges manipuliert werden. Ein solches System kann zum Beispiel die Gasannahme, die Lenkung, die Innenbeleuchtung sowie das Fahrwerk sein. Analog zum ersten Betriebsmodus wird in einem zweiten Betriebsmodus nicht nur die Art der Lichtabstrahlung 2 des Kraftfahrzeug-Scheinwerfers geändert, sondern ebenfalls charakteristische Eigenschaften der bereits genannten Systeme. Veränderungen anderer Systeme, abhängig vom vorliegenden Betriebsmodus, sind ebenfalls denkbar.

Fig. 2a zeigt den Kraftfahrzeug-Scheinwerfer 5 in einer Frontansicht, der Licht in einem Betriebsmodus abstrahlt. Fig. 2b zeigt ein Kraftfahrzeug-Scheinwerfer 5 in einer Frontansicht, der Licht in einem zweiten Betriebsmodus abstrahlt. Markiert ist jeweils die Vorderseite 21 des Licht ausstrahlenden Scheinwerfers. Der Kraftfahrzeug-Scheinwerfer weist eine zumindest teiltransparente Lichtscheibe 10 auf. Abhängig vom vorliegenden Betriebsmodus strahlt der Kraftfahrzeug-Scheinwerfer Licht von unterschiedlichen Abschnitten 13,14 dieser zumindest teiltransparenten Lichtscheibe ab. In dem in Fig. 2a dargestellten Ausführungsbeispiel liegt der erste Betriebsmodus vor und Licht wird von ersten Abschnitt 13 der zumindest teiltransparenten Lichtscheibe 10 abgestrahlt. Dahingegen liegt in dem in Fig. 2b dargestellten Ausführungsbeispiel der zweite Betriebsmodus vor und Licht wird vom zweiten Abschnitt 14 abgestrahlt.

In Fig. 3 sind die wesentlichen Bestandteile einer Vorrichtung gemäß einem bevorzugten Ausführungsbeispiel der vorliegenden Erfindung dargestellt. Der Kraftfahrzeugscheinwerfer 5 ist über eine Energieleitung S4 mit einer Energiequelle 7 verbunden. Ferner ist der Kraftfahrzeugscheinwerfer 5 mit der Scheinwerfer-Steuerleitung S2 mit der Ansteuereinrichtung 6 verbunden. Die Ansteuereinrichtung 6 wiederum ist über eine Auswahl-Steuerleitung S1 mit der Auswahleinrichtung 8 verbunden. Des weiteren ist die Ansteuereinrichtung 6 über die Anzeige-Steuerleitung S3 mit der Anzeigeeinrichtung 9 verbunden.

Über die Auswahleinrichtung 8 kann zwischen einem ersten und einem zweiten Betriebsmodus gewählt werden. Diese Auswahleinrichtung 8 kann zum Beispiel ein manueller Umschalter sein. Weiterhin ist es möglich, dass die Auswahleinrichtung 8 bestimmte Parameter des Kraftfahrzeuges interpretiert und abhängig von diesen Parametern der Betriebsmodus festgelegt wird. So wäre es zum Beispiel möglich, bei einer defensiven Fahrweise den Komfortmodus zu aktivieren, wohingegen bei sportlicher Fahrweise der Sportmodus aktiviert wird. Die Information welcher Betriebsmodus vorliegt, wird von der Auswahleinrichtung 8 über die Auswahl-Steuerleitung S1 an die Ansteuereinrichtung 6 weitergegeben. Diese Information wird nun von der Ansteuereinrichtung 6 in eine für die Anzeigeeinrichtung 9 geeignete Form umgewandelt. Die notwendigen Signale zur Anzeige des vorliegende Betriebsmoduses erhält die Anzeigeeinrichtung 9 über die Anzeige-Steuerleitung S3 von der Ansteuereinrichtung 6. Darüber hinaus bereitet die Ansteuereinrichtung 6 die Information welcher Betriebsmodus vorliegt dergestalt auf, dass der Kraftfahrzeug-Scheinwerfer 5 Licht entsprechend dem vorliegenden Betriebsmodus abstrahlt. Diese Information erhält der Kraftfahrzeug-Scheinwerfer 5 von der Ansteuereinrichtung 6 über die Scheinwerfer-Steuerleitung S2. Darüber hinaus muss der Kraftfahrzeug-Scheinwerfer 5 mit Energie versorgt werden. Dies wird durch eine Energiequelle 7 gewährleistet, die über eine Energieleitung S4 mit dem Kraftfahrzeug-Scheinwerfer 5 verbunden ist. Diese Energiequelle kann zum Beispiel eine Autobatterie oder ein Generator sein.

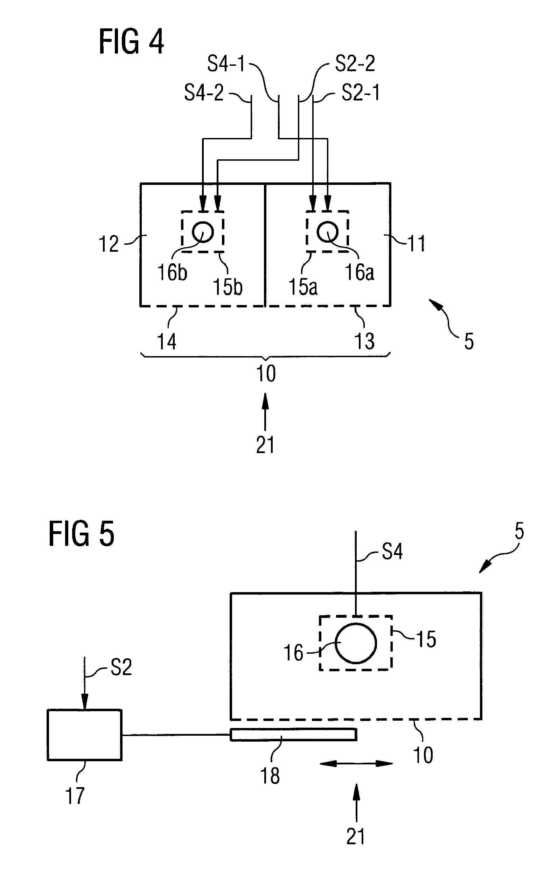

Fig. 4 zeigt ein detailliertes erstes Ausführungsbeispiel des Kraftfahrzeug-Scheinwerfers 5 mit markierter Vorderseite 21. Der Kraftfahrzeug-Scheinwerfer 5, weist eine zumindest teiltransparente Lichtscheibe 10 sowie eine erste Kammer 11 und eine zweite Kammer 12 auf. Dabei wird die erste Kammer 11 von einem ersten Abschnitt 13 der Lichtscheibe 10 begrenzt. Die zweite Kammer 12 wird von einem zweiten Abschnitt 14 der Lichtscheibe 10 begrenzt. Die erste Kammer enthält eine erste Lichtquelle 15a, die wiederum zumindest ein Leuchtmittel 16a aufweist. Die zweite Kammer 12 weist eine zweite Lichtquelle 15b auf, die ebenfalls zumindest ein Leuchtmittel 16b enthält. Verbunden sind die Lichtquellen 15a, 15b der jeweiligen Kammer über die Scheinwerfer-Steuerleitungen S2 mit der Ansteuereinrichtung 6 sowie des weiteren über die Energieleitungen S4 mit der Energiequelle 7.

Liegt der erste Betriebsmodus vor, so wird über eine erste Scheinwerfer-Steuerleitung S2-1 ein Steuersignal an die Lichtquelle 15a in der ersten Kammer 11 gesendet. Daraufhin bezieht diese erste Lichtquelle 15a Strom über die Energieleitung S4-1 von der Energiequelle 7. Nachfolgend emmitieren die Leuchtmittel 16a der ersten Lichtquelle 15a Licht. Dieses Licht kann nur von dem ersten Abschnitt 13 der zumindest teiltransparenten Lichtscheibe 10 abgestrahlt werden. Es ist offensichtlich, dass durch die Anzahl der Leuchtmittel 16a, unterschiedliche Abmessungen der ersten Kammer 11 sowie ferner der Form des ersten Abschnitts 13 der zumindest teiltransparenten Lichtscheibe 10, eine Vielzahl von designerischen Möglichkeiten bezüglich des abgestrahlten Lichtes im ersten Betriebsmodus gegeben sind.

Entsprechend den vorherigen Ausführungen wird im zweiten Betriebsmodus ein Befehl über die Scheinwerfer-Steuerleitung S2-2 an die zweite Lichtquelle 15b in der zweiten Kammer 12 gesendet. Die Lichtquelle 15b bezieht daraufhin Energie von der Energiequelle 7 über die Energieleitung S4-2. Daraufhin emmitieren die zweiten Leuchtmittel 16b der zweiten Lichtquelle 15b Licht. Dieses Licht wird nur vom zweiten Abschnitt 14 der zumindest teiltransparenten Lichtscheibe 10 abgestrahlt. Auch hier sind eine Vielzahl von Designs entsprechend der bereits gemachten Ausführung möglich. Ferner ist es offensichtlich, dass abhängig von der Anzahl der Betriebsmodi mehr als zwei Kammern vorgesehen sein können, wobei jede dieser Kammer eine Lichtquelle 15 aufweist.

Fig. 5 zeigt einen detaillierten Kraftfahrzeug-Scheinwerfer 5 in einer zweiten Ausführungsform. Markiert ist die Vorderseite 21. Auch dieser Kraftfahrzeug-Scheinwerfer weist eine zumindest teiltransparente Lichtscheibe 10 auf. Ferner enthält der Kraftfahrzeug-Scheinwerfer 5 eine Lichtquelle 15 die Leuchtmittel 16 aufweist. Über die Energieleitung S4 wird die Lichtquelle 15 mit Energie von der Energiequelle 7 versorgt. Ferner weist der Kraftfahrzeugscheinwerfer 5 eine Umschalteinrichtung 17 auf, die eine lichtundurchlässige Abdeckscheibe 18 bewegt. Befehle erhält die Umschalteinrichtung 17 über die Scheinwerfer-Steuerleitung S2.

Wird der Kraftfahrzeug-Scheinwerfer 5 aktiviert, so bezieht die Lichtquelle 15 permanent Strom über die Energieleitung S4. Welche Abschnitte der zumindest teiltransparenten Lichtscheibe von der Lichtquelle emittiertes Licht abstrahlen, hängt von der Position der Abdeckscheibe 18 an der zumindest teiltransparenten Lichtscheibe 10 ab. Verändert werden kann die Position der Abdeckscheibe 18 durch die Umschalteinrichtung 17. Die Umschalteinrichtung 17 bewegt die Abdeckscheibe 18 dergestalt, dass diese definierte Abschnitte der zumindest teiltransparenten Lichtscheibe 10 abdeckt. Welcher Abschnitt der Lichtscheibe 18 abgedeckt wird ist abhängig vom vorliegenden Betriebsmodus. Einen Stellbefehl mit der Information welcher Betriebsmodus vorliegt, erhält die Umschalteinrichtung 17 über die Scheinwerfer-Steuerleitung S2. Erhält die Umschalteinrichtung 17 den Befehl, dass der erste Betriebsmodus vorliegt, bewegt die Umschalteinrichtung 17 die Abdeckscheibe 18 in eine erste Position und gibt einen ersten Abschnitt der zumindest teiltransparenten Lichtscheibe 10 frei. Aufgrund der teilweisen Abdeckung der zumindest teiltransparenten Lichtscheibe 10 durch die Abdeckscheibe 18, kann nur Licht von dem nicht abgedeckten ersten Abschnitt der zumindest teiltransparenten Lichtscheibe abgestrahlt werden. Liegt der zweite Betriebsmodus vor, wird die Abdeckscheibe 18 in eine zweite Position bewegt und ein zweiter Abschnitt der zumindest teiltransparenten Lichtscheibe 10 wird freigegeben. Entsprechend kann in diesem Betriebsmodus nur Licht von dem zweiten, nicht abgedeckten Abschnitt der Lichtscheibe 10 abgestrahlt werden.

Es ist ersichtlich, dass die Anzahl der Positionen welche die Abdeckscheibe einnehmen kann, abhängig ist von der Anzahl der Betriebsmodi. Ferner ist es auch möglich verschiedene Abdeckscheiben gleichzeitig abhängig von dem vorliegenden Betriebsmodus in eine jeweils vorgegebene Position zu bewegen. Dadurch sind komplexe Abdeckungen der Lichtscheibe 10 und somit komplexe Lichtabstrahlmuster abhängig von dem jeweils vorliegenden Betriebsmodus möglich.

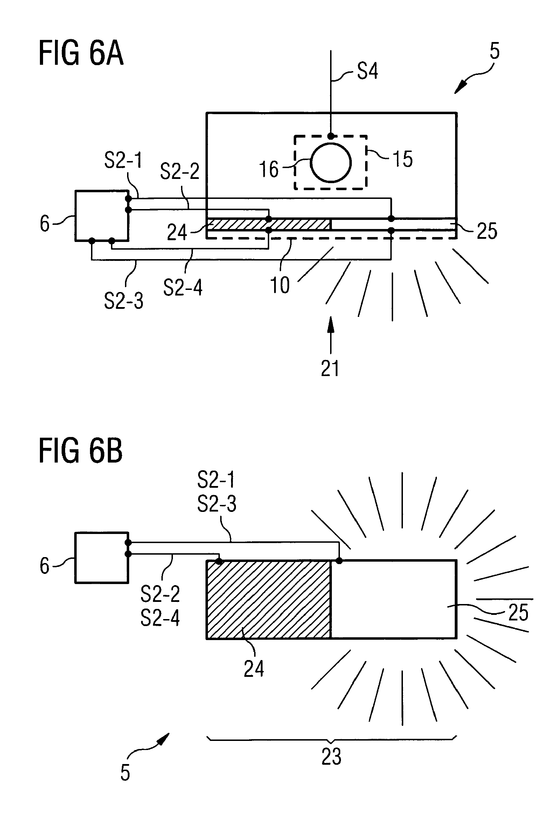

Die Figuren 6a und 6b zeigen einen detaillierten Kraftfahrzeug-Scheinwerfer 5 gemäß einem dritten bevorzugten Ausführungsbeispiel in unterschiedlichen Ansichten. Markiert ist die Vorderseite 21 des Kraftfahrzeug-Scheinwerfers 5. Dieser Kraftfahrzeug-Scheinwerfer 5, weist eine zumindest teiltransparente Lichtscheibe 10 auf. Parallel zu dieser teiltransparenten Lichtscheibe 10 ist eine weitere Lichtscheibe 23 eingebaut, deren Transparenz elektrisch veränderbar ist. Es ist jedoch offensichtlich, dass diese weitere Lichtscheibe 23 nicht zwangsläufig parallel zu der teiltransparenten Lichtscheibe 10 eingebaut sein muss, sondern diese ebenfalls ersetzen kann. Der Kraftfahrzeug-Scheinwerfer 5 enthält zudem eine Lichtquelle 15 mit Leuchtmitteln 16. Diese Lichtquelle 15 wird mit Energie von der Energiequelle 7 versorgt. Die weitere Lichtscheibe 23 ist unterteilt in zwei Scheibensegmente 24 und 25. Es ist jedoch offensichtlich, dass nicht nur zwei Scheibensegmente, sondern wesentlich mehr Scheibensegmente möglich sind. In dem dargestellten Ausführungsbeispiel ist das erste Scheibensegment 24 von der Ansteuereinrichtung 6 über eine Steuerleitung S2-2 sowie des Weiteren mit einer Steuerleitung S2-4 verbunden.

Wird der Kraftfahrzeug-Scheinwerfer 5 angeschaltet, so bezieht die in dem Kraftfahrzeug-Scheinwerfer 5 enthaltene Lichtquelle 15 permanent Strom über die Energieleitung S4. Welcher Teil des Kraftfahrzeug-Scheinwerfers 5 in welchem Maße Licht abstrahlt, hängt ab von der Transparenz des ersten und/oder zweiten Scheibensegments 24 und 25. In dem dargestellten Ausführungsbeispiel, weist das erste Scheibensegment 24 eine nur geringfügige Transparenz auf. Entsprechend strahlt der Kraftfahrzeug-Scheinwerfer 5 im Bereich des ersten Scheibensegments 24 kein Licht ab. Eingestellt wird die Transparenz des jeweiligen Scheibensegments 24 und/oder 25 durch die Ansteuereinrichtung 6. Diese ist über jeweils zwei Steuerleitungen S2-2 und S2-4 bzw. S2-1 und S2-3 mit den jeweiligen Scheibensegment 24 bzw. 25 elektrisch verbunden. Üblicherweise erfolgt die Kontaktierung durch die Steuereinrichtung beidseitig des jeweiligen Scheibensegments 24 bzw. 25. Herrscht zwischen den beiden Seiten des jeweiligen Scheibensegments eine Potenzialdifferenz, so tritt unter dem Einfluss des entstehenden elektrischen Feldes eine Drehung der Flüssigkristallmoleküle in dem Scheibensegment auf. Die Transparenz dieses Scheibensegmentes wird verringert und ein Durchtritt von Licht somit vermindert. Entsprechend kann Licht vom Kraftfahrzeug-Scheinwerfer 5 nur im Bereich von Scheibensegmenten mit einer hohen Transparenz abgestrahlt werden.

Über das dargestellte Ausführungsbeispiel hinaus ist es möglich, die transparenzveränderbare weitere Lichtscheibe mit einer quasi beliebigen Anzahl unterschiedlicher Scheibensegmente auszustatten. Durch eine kombinierte Ansteuerung unterschiedlicher Scheibensegmente lassen sich dadurch eine quasi beliebige Anzahl unterschiedlicher Betriebsmodi realisieren. Um dies zu ermöglichen ist jedes der Scheibensegmente mit Steuerleitungen S2-x mit der Ansteuereinrichtung 6 verbunden. Durch die Ansteuereinrichtung 6 wird abhängig von dem gewählten Betriebsmodus, die Transparenz definierter Scheibensegmente geändert. Dies erlaubt es, durch eine Umprogrammierung der Ansteuereinrichtung 6, die Lage und Anzahl der anzusteuernden Scheibensegmente abhängig von dem jeweiligen Betriebsmodus zu ändern. Dadurch kann das äußere Erscheinungsbild abhängig von dem jeweiligen Betriebsmodus auch nachträglich geändert werden.

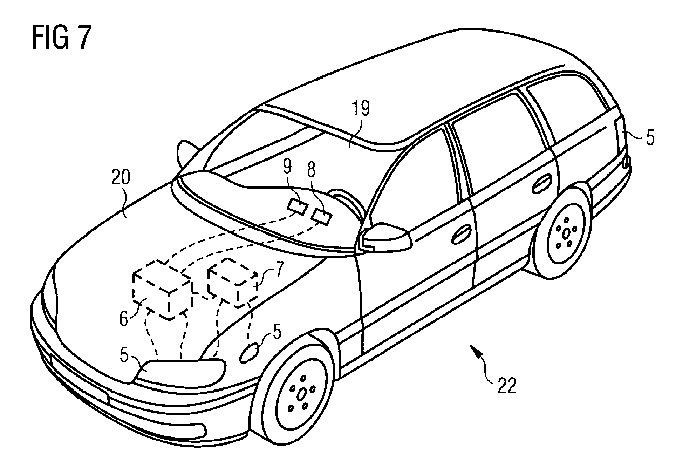

Fig. 7 zeigt ein Kraftfahrzeug mit der erfindungsgemäßen Scheinwerferanordnung. Das Kraftfahrzeug weist eine Fahrgastzelle 19 sowie eine Karosserie 20 auf. In der Fahrgastzelle ist in diesem Ausführungsbeispiel die Auswahleinrichtung 8 sowie die Anzeigeeinrichtung 9 vorgesehen. Innerhalb der Karosserie 20 sind Kraftfahrzeug-Scheinwerfer 5 angeordnet. Darüber hinaus ist die Ansteuereinrichtung 6 sowie die Energiequelle 7 innerhalb der Karosserie 20 vorgesehen. Die dargestellten Kraftfahrzeug-Scheinwerfer 5 sind in unterschiedlichen Betriebsmodi betreibbar. Wird nun vom Fahrzeugnutzer ein Betriebsmodus durch die Auswahleinrichtung 8 festgelegt, wird diese Information an die Ansteuereinrichtung 6 übermittelt. Diese wiederum gibt an eine Anzeigeeinrichtung 9 geeignete Steuersignale weiter, um den vorliegenden Betriebsmodus dem Fahrzeugnutzer anzuzeigen. Ferner gibt die Ansteuereinrichtung Steuerbefehle an den oder die Kraftfahrzeug-Scheinwerfer weiter, so dass die Scheinwerfer Licht, entsprechend dem vorliegenden Betriebsmodus abstrahlen.

Obgleich die vorliegende Erfindung vorstehend anhand bevorzugter Ausführungsbeispiele beschrieben wurde, ist sie darauf nicht beschränkt, sondern auf vielfältige Art und Weise modifizierbar. So kann die zumindest teiltransparente Lichtscheibe oder die Abdeckscheibe an sich eine gewisse Färbung aufweisen. Auch ist es möglich, dass zusätzlich Scheinwerfer am Kraftfahrzeug angeordnet werden, um den jeweils ausgewählten Betriebsmodus zu unterstreichen. Auch können in einem Gehäuse unterschiedliche Leuchtmittel verwendet werden, so zum Beispiel für die Frontscheinwerfer eine Glühlampe und für einen Blinker im gleichen Gehäuse eine Leuchtdiode. Bezugszeichenliste
- I1: Stellbefehl: Betriebsmodus 1 oder Betriebsmodus 2
- I2: Stellbefehl: Betriebsmodus 1
- I3: Stellbefehl: Betriebsmodus 2
- E1: Entscheidung: Betriebsmodus 1 oder Betriebsmodus 2

- 1: Lichtabstrahlung Betriebsmodus 1
- 2: Lichtabstrahlung Betriebsmodus 2
- 3: Charakteristische Eigenschaften weiterer Systeme 1
- 4: Charakteristische Eigenschaften weiterer Systeme 2
- 5: Kraftfahrzeug-Scheinwerfer
- 6: Ansteuereinrichtung
- 7: Energiequelle
- 8: Auswahleinrichtung
- 9: Anzeigeeinrichtung
- S1: Auswahl-Steuerleitung
- S2: Scheinwerfer-Steuerleitung
- S2-1: erste Scheinwerfer-Steuerleitung
- S2-2: zweite Scheinwerfer-Steuerleitung
- S2-3: dritte Scheinwerfer-Steuerleitung
- S2-4: vierte Scheinwerfer-Steuerleitung
- S3: Anzeige-Steuerleitung
- S4: Energieleitung
- S4-1: erste Energieleitung
- S4-2: zweite Energieleitung
- 10: zumindest teiltransparente Lichtscheibe
- 11: erste Kammer
- 12: zweite Kammer
- 13: erster Abschnitt der zumindest teiltransparenten Lichtscheibe
- 14: zweiter Abschnitt der zumindest teiltransparenten Lichtscheibe
- 15: Lichtquelle
- 15a: erste Lichtquelle
- 15b: zweite Lichtquelle
- 16: Leuchtmittel
- 16a: erstes Leuchtmittel
- 16b: zweites Leuchtmittel
- 17: Umschalteinrichtung
- 18: lichtundurchlässige Abdeckblende
- 19: Fahrgastzelle
- 20: Karoserie
- 21: Vorderseite
- 22: Kraftfahrzeug
- 23: weitere Lichtscheibe
- 24: erstes Scheibensegment
- 25: zweites Scheibensegment

## Patentansprüche

1. Scheinwerferanordnung für ein Kraftfahrzeug,
- mit einem steuerbaren Kraftfahrzeug-Scheinwerfer (5), der ein Scheinwerfergehäuse mit einer zumindest teiltransparenten Lichtscheibe (10) und zumindest eine im Inneren des Scheinwerfergehäuses angeordnete Lichtquelle (15) aufweist; sowie mit
- einer Ansteuereinrichtung (6), welche zur Steuerung des Kraftfahrzeug-Scheinwerfers (5) mit diesem verbunden ist und welche dazu ausgelegt ist, den Kraftfahrzeug-Scheinwerfer (5) in wenigstens zwei Betriebsmodi derart zu betreiben, dass der Scheinwerfer in einem ersten Betriebsmodus von der Lichtquelle (15) erzeugtes Licht lediglich über einen ersten Abschnitt (13) der Lichtscheibe (10) abstrahlt und in einem zweiten Betriebsmodus von der Lichtquelle (15) erzeugtes Licht über einen zweiten, vom ersten Abschnitt zumindest teilweise verschiedenen Abschnitt (14) der Lichtscheibe (10) abstrahlt.

2. Scheinwerferanordnung nach Anspruch 1, **dadurch gekennzeichnet, dass** der erste Abschnitt (13) der Lichtscheibe vom zweiten Abschnitt (14) der Lichtscheibe (10) vollständig verschieden ist und von der Lichtquelle (15) erzeugtes Licht in dem zweiten Betriebsmodus lediglich über den zweiten Abschnitt (14) der Lichtscheibe (10) abstrahlt.

3. Scheinwerferanordnung nach Anspruch 2, **dadurch gekennzeichnet, dass** der Kraftfahrzeug-Scheinwerfer (5) im ersten Betriebsmodus eine gleiche Funktion aufweist wie im zweiten Betriebsmodus.

4. Scheinwerferanordnung nach wenigstens einem der vorhergehenden Ansprüche, **dadurch gekennzeichnet, dass** bei der gleichen Funktion der Kraftfahrzeug-Scheinwerfer (5) eine in etwas gleiche Leuchtrichtung und/oder Leuchtintensität und/oder Ausleucht- oder Signalleuchtwirkung erzeugt.

5. Scheinwerferanordnung nach wenigstens einem der vorhergehenden Ansprüche, **dadurch gekennzeichnet, dass** der Kraftfahrzeug-Scheinwerfer (5) zwei Lichtquellen aufweist, wobei eine erste Lichtquelle (15a) dem ersten Betriebsmodus und eine zweite Lichtquelle (15b) dem zweiten Betriebsmodus zugeordnet ist.

6. Scheinwerferanordnung nach Anspruch 5, **dadurch gekennzeichnet, dass** eine Energiequelle (7) vorgesehen ist die im ersten Betriebsmodus die erste Lichtquelle (15a) und im zweiten Betriebsmodus die zweite Lichtquelle (15b) mit elektrischer Energie versorgt.

7. Scheinwerferanordnung nach Anspruch 6, **dadurch gekennzeichnet, dass** der Kraftfahrzeug-Scheinwerfer zumindest zwei voneinander getrennte Kammern (11,12) aufweist, wobei die erste Kammer (11) einen ersten Abschnitt der Lichtscheibe (13) und die zweite Kammer (12) einen vom ersten Abschnitt verschiedenen Abschnitt (14) der Lichtscheibe (10) aufweist.

8. Scheinwerferanordnung nach Anspruch 7, **dadurch gekennzeichnet, dass** die erste Kammer (11) die erste Lichtquelle (15a) und die zweite Kammer (12) die zweite Lichtquelle (15b) aufweist.

9. Scheinwerferanordnung nach einem der Ansprüche 1 bis 4, **dadurch gekennzeichnet, dass** eine Energiequelle (7) vorgesehen ist, die sämtliche Lichtquellen (15) gleichzeitig mit elektrischer Energie versorgt.

10. Scheinwerferanordnung nach Anspruch 9, **dadurch gekennzeichnet, dass** der Kraftfahrzeug-Scheinwerfer (5) eine Umschalteinrichtung (17) aufweist, die derart ausgebildet ist, zumindest eine lichtundurchlässige Abdeckblende (18) in eine erste und in eine zweite Position der Lichtscheibe zu bewegen, wobei die erste Position dem ersten Betriebsmodus und die zweite Position dem zweiten Betriebsmodus zugeordnet ist.

11. Scheinwerferanordnung nach Anspruch 10, **dadurch gekennzeichnet, dass** die lichtundurchlässige Abdeckblende (18) in der ersten Position einen ersten Abschnitt der zumindest teiltransparenten Lichtscheibe (10) und in einem zweiten Betriebsmodus einen zweiten Abschnitt der zumindest teiltransparenten Lichtscheibe (10) abdeckt.

12. Scheinwerferanordnung nach wenigstens einem der Ansprüche 1 bis 4, **dadurch gekennzeichnet, dass** der Kraftfahrzeug-Scheinwerfer (5) eine weitere Lichtscheibe (23) aufweist, deren Transparenz elektrisch veränderbar ausgebildet ist.

13. Scheinwerferanordnung nach Anspruch 12, **dadurch gekennzeichnet, dass** die weitere Lichtscheibe (23) Flüssigkristalle aufweist, deren Transparenz sich abhängig von einer angelegten Spannung ändern.

14. Scheinwerferanordnung nach Anspruch 12 und 13, **dadurch gekennzeichnet, dass** die weitere Lichtscheibe (23) zumindest ein erstes und ein zweites Scheibensegment (23,24) aufweist, wobei die Transparenz beider Scheibensegmente (23,24) unabhängig voneinander elektrisch veränderbar sind.

15. Scheinwerferanordnung nach Anspruch 14, **dadurch gekennzeichnet, dass** im ersten Betriebsmodus die Transparenz des ersten Scheibensegmentes (24) und im zweiten Betriebsmodus die Transparenz des zweiten Scheibensegmentes (25) verändert ist.

16. Scheinwerferanordnung nach wenigstens einem der Ansprüche 12 bis 15, **dadurch gekennzeichnet, dass** die weitere Lichtscheibe (23) mit der Ansteuereinrichtung (6) verbunden ist, welche die Betriebsmodi steuert.

17. Scheinwerferanordnung nach wenigstens einem der Ansprüche 12 bis 16, **dadurch gekennzeichnet, dass** die weitere Lichtscheibe (23) parallel zu der zumindest teiltransparenten Lichtscheibe (10) angeordnet ist.

18. Scheinwerferanordnung nach wenigstens einem der Ansprüche 12 bis 16, **dadurch gekennzeichnet, dass** die weitere Lichtscheibe (23) anstelle der zumindest teiltransparenten Lichtscheibe (10) in den Kraftfahrzeug-Scheinwerfer (5) eingebaut ist.

19. Scheinwerferanordnung nach wenigstens einem der vorhergehenden Ansprüche, **dadurch gekennzeichnet, dass** eine mit der Ansteuereinrichtung (6) verbundene Auswahleinrichtung (8) zur Festlegung des ersten und des zweiten Betriebsmodus vorgesehen ist.

20. Scheinwerferanordnung nach zumindest einem der vorhergehenden Ansprüche, **dadurch gekennzeichnet, dass** die Ansteuereinrichtung (6) mit einer Anzeigeeinrichtung (9) verbunden ist, wobei die Anzeigeeinrichtung (9) den jeweils vorliegenden Betriebsmodus anzeigt.

21. Scheinwerferanordnung nach zumindest einem der vorhergehenden Ansprüche, **dadurch gekennzeichnet, dass** der Kraftfahrzeug-Scheinwerfer (5) ein Frontscheinwerfer, eine Rückleuchte, ein Bremslicht und/oder ein Blinker ist.

22. Scheinwerferanordnung nach zumindest einem der vorhergehenden Ansprüche, **dadurch gekennzeichnet, dass** das Leuchtmittel (15) als eine Glühlampe, eine Leuchtdiode, eine Halogenlampe und/oder eine Gasentladungslampe ausgeführt ist.

23. Verfahren zum Betreiben eines Scheinwerfers, insbesondere eines Scheinwerfers für oder in einem Kraftfahrzeug, nach zumindest einem der vorhergehenden Patentansprüche, wobei der Kraftfahrzeug-Scheinwerfer (5) zumindest eine Lichtquelle (15) mit zumindest einem Leuchtmittel (16) aufweist und der Scheinwerfer (5) ferner zumindest eine zumindest teiltransparente Lichtscheibe (10) aufweist und der Scheinwerfer (5) in zumindest zwei Betriebsmodi betreibbar ist, wobei in einem ersten Betriebsmodus von der Lichtquelle (15) erzeugtes Licht über einen ersten Abschnitt (13) der zumindest teiltransparenten Lichtscheibe (10) abgestrahlt wird und in einem zweiten Betriebsmodus von der Lichtquelle (15) erzeugtes Licht über einen zweiten, vom ersten Abschnitt zumindest teilweise verschiedenen Abschnitt (14) der zumindest teiltransparenten Lichtscheibe (10) abgestrahlt wird.

24. Verfahren nach Anspruch 23, **dadurch gekennzeichnet, dass** im ersten Betriebsmodus eine erste Lichtquelle (15a) und im zweiten Betriebsmodus eine zweite Lichtquelle (15b) aktiviert wird.

25. Verfahren nach Anspruch 23, **dadurch gekennzeichnet, dass** im ersten Betriebsmodus ein erster Abschnitt und im zweiten Betriebsmodus ein zweiter Abschnitt der zumindest teiltransparenten Lichtscheibe (10) von einer lichtundurchlässigen Abdeckscheibe (18) abgedeckt wird.

26. Verfahren nach Anspruch 23, **dadurch gekennzeichnet, dass** eine weitere Lichtscheibe (23) mit elektrisch veränderbarer Transparenz parallel zur zumindest teiltransparenten Lichtscheibe (10) vorgesehen ist und im ersten Betriebsmodus die Transparenz eines ersten Scheibensegmentes (24) und im zweiten Betriebsmodus die Transparenz eines zweiten Scheibensegmentes (25) der weiteren Lichtscheibe (23) verändert wird.

27. Verfahren nach wenigstens einem der Ansprüche 23 bis 26, **dadurch gekennzeichnet, dass** durch eine Auswahleinrichtung (8) festgelegt wird, ob der erste oder der zweite Betriebsmodus vorliegt.

28. Verfahren nach einem der Ansprüche 23 bis 27, **dadurch gekennzeichnet, dass** abhängig vom dem vorliegenden ersten oder zweiten Betriebsmodus charakteristische Eigenschaften weiterer im Kraftfahrzeug enthaltener Systeme, insbesondere eines Fahrwerk- und/oder Lenkungssystems und/oder einer Instrumentenbeleuchtung, verändert werden.

29. Kraftfahrzeug, das ein Scheinwerferanordnung nach zumindest einem der Ansprüche 1 bis 22 aufweist.

30. Kraftfahrzeug nach Anspruch 29, mit:
- einer Karosserie (20), in welcher der zumindest eine Kraftfahrzeug-Scheinwerfer (5) integriert ist und die Ansteuereinrichtung (6) und die Energiequelle (7) angeordnet ist; sowie
- eine Fahrgastzelle (19), in der die Auswahleinrichtung (8) und die Anzeigeeinrichtung (9) angeordnet ist.
